Europäisches Patentamt

European Patent Office

Office européen des brevets

(11) Veröffentlichungsnummer: 0 222 352
A2

## (12) EUROPÄISCHE PATENTANMELDUNG

(21) Anmeldenummer: 86115520.8

(22) Anmeldetag: 07.11.86

(51) Int. Cl.⁴: F03B 17/06

(30) Priorität: 07.11.85 DE 3539486

(43) Veröffentlichungstag der Anmeldung:
20.05.87 Patentblatt 87/21

(84) Benannte Vertragsstaaten:
AT BE CH DE ES FR GB GR IT LI LU NL SE

(71) Anmelder: Dauenhauer, Johann
Bleriotstrasse 42
D-8900 Augsburg(DE)

(72) Erfinder: Dauenhauer, Johann
Bleriotstrasse 42
D-8900 Augsburg(DE)

(74) Vertreter: Munk, Ludwig, Dipl.-Ing.
Patentanwalt Prinzregentenstrasse 1
D-8900 Augsburg(DE)

(54) Stromaggregat.

(57) Bei einem Stromaggregat mit mindestens zwei parallel nebeneinander angeordneten, in ein Flußbett eingelegten, überfluteten Turbinen (3), die jeweils einen zugeordneten Generator (4) antreiben, lassen sich dadurch ein einfacher Aufbau und eine hohe Funktionssicherheit bei gleichzeitiger hoher Mobilität erreichen, daß die Turbinen (3), die jeweils mindestens eine auf einer Welle (5) aufgenommene Schaufel in Form eines etwa über die ganze Wellenlänge sich erstreckenden Schneckengangs (6) aufweisen, und die Generatoren (4), die wasserdicht gekapselt sind, auf einem im Flußbett verankerbaren, palettenförmigen Tragrahmen (1) aufgenommen sind, der Lagerböcke (2) für die Turbinen (3) und die Generatoren (4) aufweist.

FIG 2

## Stromaggregat

Die Erfindung betrifft ein Stromaggregat mit mindestens zwei parallel nebeneinander angeordneten, in ein Flußbett eingelegten, überfluteten Turbinen, die jeweils einen zugeordneten Generator antreiben.

Eine Anordnung dieser Art ist aus der DE-A 31 12 480 bekannt. Bei dieser bekannten Anordnung sind die Turbinen auf einem auf den Flußbettgrund aufgebrachten Betonfundament aufgenommen. Die Generatoren sind in in das Fundament eingebrachten, unterirdischen Kammern angeordnet und über Winkelgetriebe mit der jeweils zugeordneten Turbinenwelle verbunden. Die Turbinen bestehen jeweils aus einer vergleichsweise langen Welle mit einer großen Anzahl von hierauf hintereinander angeordneten Schaufelkränzen.

Anordnungen dieser Art erweisen sich als nicht einfach und zuverlässig genug. Das hier benötigte Betonfundament erfordert nicht nur einen hohen Aufwand sowie einen nicht unbeträchtlichen Eingriff in die Natur, sondern führt auch zu einer vielfach unerwünschten Standortgebundenheit. Auch die unterirdische Anordnung der Generatoren sowie die in diesem Zusammenhang benötigten Winkelgetriebe erfordern einen hohen Bereitstellungsaufwand. Dasselbe gilt für den hier vorgesehenen Aufbau der Turbinen mit einer großen Anzahl von hintereinander angeordneten Schaufelkränzen. Dieser hohe Bereitstellungsaufwand wirkt sich ungünstig auf die erzielbare Wirtschaftlichkeit aus. Ein weiterer Nachteil der hier vorgesehenen Schaufelkränze ist darin zu sehen, daß diese im Falle von vom Wasser mitgeführtem Schwimmgut, wie Steinen, Holzstücken etc. äußerst störanfällig sind. Auch aus diesem Grunde ist die bekannte Anordnung für viele Einsatzfälle nicht geeignet.

Hiervon ausgehend ist es daher die Aufgabe der vorliegenden Erfindung, unter Vermeidung der Nachteile der bekannten Anordnungen ein Stromaggregat eingangs erwähnter Art zu schaffen, das einen einfachen Aufbau aufweist und mit geringem Aufwand in und außer Stellung gebracht werden kann und das gleichzeitig auch bei robusten Betriebsverhältnissen eine hohe Funktionssicherheit gewährleistet.

Diese Aufgabe wird erfindungsgemäß dadurch gelöst, daß die Turbinen, die jeweils mindestens eine auf einer Welle aufgenommene Schaufel in Form eines etwa über die ganze Wellenlänge sich erstreckenden Schneckengangs aufweisen, une die Generatoren, die wasserdicht gekapselt sind, auf einem im Flußbett verankerbaren, palettenförmigen Tragrahmen aufgenommen sind, der Lagerböcke für die Turbinen und die Generatoren aufweist.

Diese Maßnahmen ergeben in vorteilhafter Weise eine komplett vormontierbare Baueinheit, die in vormontiertem Zustand einfach mittels eines Krans etc. in das Bett eines natürlichen Wasserlaufs eingelegt werden kann, was sich günstig auf die Bereitsstellungskosten und damit die erzielbare Wirtschaftlichkeit auswirkt. Ein weiterer Vorteil der erfindungsgemäßen Maßnahmen ist darin zu sehen, daß eine derartige Baueinheit leicht in und außer Stellung gebracht werden kann, was nicht nur eine hohe Mobilität gewährleistet, sondern auch eine einfache Austauschbarkeit sicherstellt, womit der Wartungsaufwand in Grenzen bleibt. Dadurch, daß die den Turbinen zugeordneten Generatoren auf dem Traggestellt aufgenommen sind, ist ferner nicht nur eine automatische Kühlung der Generatoren durch das sie umströmende Wasser sichergestellt, sondern wird auch eine einfache Austauschbarkeit der Generatoren gewährleistet, was sich ebenfalls vorteilhaft auf den Wartungs-und Instandhaltungsaufwand auswirken kann. Die Verwendung der innerhalb der erfindungsgemäßen Kombination vorgeschlagenen Schneckenturbinen trägt weiter zur Gewährleistung einer einfachen und robusten Bauweise bei. Gleichzeitig wird hierdurch sichergestellt, daß vom Wasser mitgeführtes Schwimmgut in Form von Steinen, Holzstücken etc. abgewiesen bzw. in Strömungsrichtung weitertransportiert wird, was sich vorteilhaft auf die Erlangung eines möglichst störungsfreien Betriebs auswirkt. Der mit den erfindungsgemäßen Maßnahmen erzielbare technische Fort schritt ist somit insbesondere in der Erlangung einer höchst einfachen und dennoch robusten Bauweise und damit einer guten Gesamtwirtschaftlichkeit zu sehen.

In vorteilhafter Weiterbildung der übergeordneten Maßnahmen können die Generatoren im Bereich des stromabwärtigen Endes der jeweils zugeordneten Turbine auf den Tragrahmen aufgenommen und mit ihrer Antriebswelle koaxial zur Welle der jeweils zugeordneten Turbine angeordnet und hiermit mittels einer Wellenkupplung direkt gekuppelt sein. Hierdurch ergibt sich eine besonders strömungsgünstige Anordnung. Gleichzeitig wird hierdurch eine besonders einfache Austauschbarkeit der Generatoren ermöglicht.

Eine weitere zweckmäßige Maßnahme kann darin bestehen, daß auf dem Tragrahmen zwei parallel nebeneinander angeordnete Turbinen aufgenommen sind, deren schneckengangförmige Schaufeln gegenläufige Steigungen aufweisen. Hierdurch wird sichergestellt, daß die im Betrieb entstehenden Seitenkräfte und damit die auf den Tragrahmen wirkenden Kippmomente sich gegenseitig aufheben, was eine äußerst stabile Positionierung des Tragrahmens ergibt.

Vorteilhaft kann der Tragrahmen im Bereich seiner Unterseite mit vorzugsweise in Strömungsrichtung gekrümmten Verankerungszinken versehen sein. Alternativ oder zusätzlich hierzu kann der Tragrahmen zweckmäßig mit seiner in Ström-ungsrichtung hinteren Stirnseite an einem stationären Halter angehängt sein. Diese Maßnahmen ermöglichen eine einfache und zuverlässige Verankerung des Tragrahmens. Eine weitere vorteilhafte Maßnahme kann darin bestehen, daß der Tragrahmen mit Leiteinrichtungen vorzugsweise in Form von aufgesetzten Blechen etc. zur Bildung von Strömungskanälen versehen ist.

In weiterer Fortbildung der übergeordneten Maßnahmen können die dem Wasser ausgesetzten Teile des Tragrahmens, der durch Turbinen und der Generatoren aus rostfreien Material bestehen, so daß auch bei geringem Wartungsaufwand eine hohe Lebensdauer erreichbar ist.

Zweckmäßig kann jedem Generator ein Gleichrichter nachgeordnet sein, wobei sämtliche Gleichrichter auf einen gleichen Ausgangswert eingestellt sind. Diese Maßnahme ist sowohl beim Einsatz von Gleichstromgeneratoren als auch beim Einsatz von Wechselstromgeneratoren vorteilhaft, da hiermit auf einfache Weise eine genaue Angleichung der jeweils erzeugten Spannung möglich ist, ohne daß eine Regelung der Drehzahl der Turbinen zu erfolgen hat, was den Bereitstellungsaufwand äußerst stark vereinfacht. Eine weitere zweckmäßige Maßnahme kann in diesem Zusammenhang darin bestehen, daß sämtliche Gleichrichter bezüglich eines nachgeordneten Wechselrichters parallel geschaltet sind, der mit der Frequenz des zu versorgenden Stromnetzes getaktet wird. Hierdurch wird im Falle der Erzeugung von Wechselstrom sichergestellt, daß die Frequenz des erzeugten Wechselstroms mit der Netzfrequenz genau übereinstimmt. Dem Wechselrichter kann ein Transformator nachgeordnet sein, der den erzeugten Strom auf eine hohe Spannung transportiert, so daß ein Stromtransport über eine größere Distanz möglich ist.

Nachstehend wird ein Ausführungsbeispiel der Erfindung anhand der Zeichnung näher erläutert. In der Zeichnung zeigen.

Figur 1 eine Draufsicht auf einen mit Turbinen und Generatoren bestückten Tragrahmen,

Figur 2 eine Seitenansicht der Anordnung gemäß Figur 1,

Figur 3 eine Frontansicht der Anordnung gemäß Figur 1 und

Figur 4 eine Schemadarstellung eines aus zwei erfindungsgemäßen Aggregaten zusammengestellten Wasserkraftwerks.

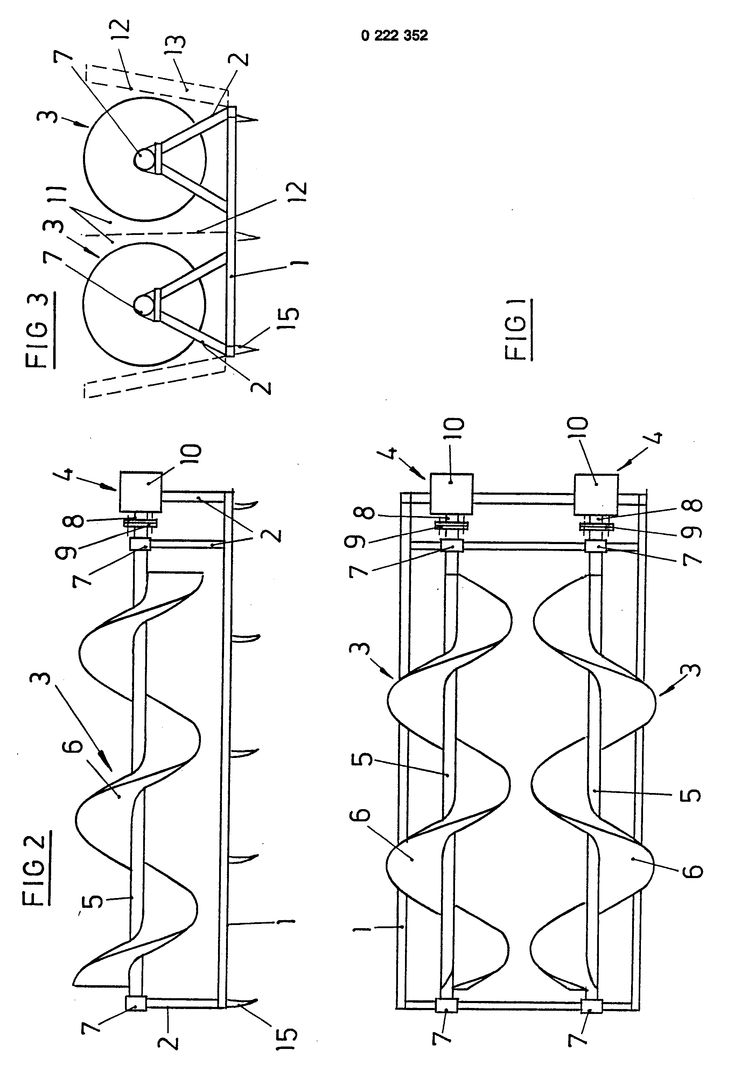

Das erfindungsgemäße Stromaggregat besteht, wie die Figuren 1 bis 3 anschaulich zeigen, aus einem palettenförmigen Tragrahmen 1, der mit Lagerböcken 2 für zwei parallel nebeneinander angeordnete Schneckenturbinen 3 und hiermit gekuppelte Generatoren 4 versehen ist. Die Schneckenturbinen 2 bestehen jeweils aus einer im Bereich ihrer Enden auf den zugeordneten Lagerböcken 2 aufgenommenen Welle 5, auf der eine Turbinenschaufel in Form einem praktisch über die ganze Wellenlänge durchgehenden Schneckengangs 6 aufgenommen ist. Die Steigung der Schneckengänge 6 der beiden nebeneinander angeordneten Schneckenturbinen 3 ist gegenläufig, so daß sich eventuelle Seitenkräfte aufheben. Die lagerbockseitigen Wellenlager 7 sind entweder als wassergeschmierte Lager ausgebildet oder gegen Wassereintritt gekapselt.

Jede Schneckenturbine 3 treibt einen zugeordneten Genera tor 4 an. Die Generatoren 4 sind im Bereich des stromabwärtigen Endes der jeweils zugeordneten Turbine vorgesehen und so angeordnet, daß ihre Antriebswelle 8 mit der jeweils zugeordneten Turbinenwelle 5 fluchtet. Die Turbinenwellen 5 sind mit der jeweils zugeordneten Generator-Antriebswelle 8 mittels einer einfachen Wellenkupplung 9, mittels der Fluchtungsfehler ausgleichbar sind, drehfest lösbar miteinander verbunden. Die Generatoren 4 sind wasserdicht gekapselt, d. h. besitzen ein wasserdichtes Gehäuse 10, das gegenüber der zugeordneten Antriebswelle 8 mittels einer Wellendichtung abgedichtet ist.

Das komplette, aus Traggestell 1, Turbinen 3 und Generatoren 4 bestehende Aggregat wird als komplette Baueinheit vormontiert und anschließend mittels eines Krans oder dergleichen so in das Flußbett eines natürlichen Wasserlaufs eingelegt, daß die Schneckengänge 6 überflutet sind. Zur Gewährleistung einer hohen Lebensdauer können die dem Wasser ausgesetzten Teile dieser Baueinheit aus rostfreiem Material, beispielsweise Aluminium und/oder Kunststoff bestehen. Zur Erzielung von den Schneckenturbinen 3 zugeordneten Strömungskanälen 11 kann der Tragrahmen 1 mit durch aufgesetzte Bleche gebildeten Leiteinrichtungen 12 versehen sein. Diese können im Bereich der in Strömungsrichtung hinteren Stirnseite zur Erzielung eines hohen Durchsatzes trichterförmig geöffnet sein, wie bei 13 angedeutet ist. Die genannten Leiteinrichtungen sind lediglich in der Figur 3 mit gestrich-elten Linien angedeutet, da sie im Falle einer starken natürlichen Wasserströmung auch entfallen können.

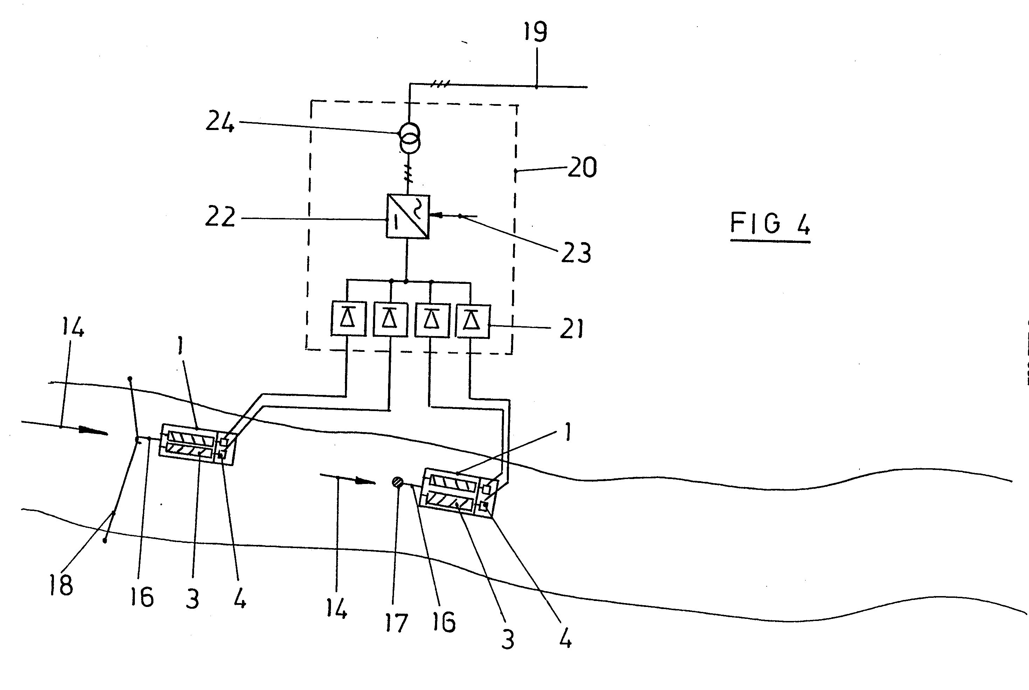

Es versteht sich von selbst, daß der Tragrahmen 1 gegenüber der in Figur 4 durch die Pfeile 14 angedeuteten Strömungsrichtung des Wassers jeweils so ausgerichtet wird, daß die Turbinenwellen 5 parallel zur Strömungsrichtung verlaufen. Der Tragrahmen 1 wird an der jeweils gewünschten Stelle verankert. Hierzu besitzt der Tragrahmen 1 im dargestellten Ausführungsbeispiel im Bereich seiner Unterseite vorgesehene Verankerungszinken 15, die in Strömungsrichtung gekrümmt sind. Mit Hilfe der Verankerungszinken 15 kann sich der Tragrahmen 1 in einem steinigen Untergrund festbeißen. Im dargestellten Ausführungsbeispiel ist der Tragrahmen 1 zusätzlich hierzu, wie Figur 4 zeigt, mittels eines Seils 16 etc. an einem stationären Halter angehängt. Dieser kann, wie in Figur 4 rechts gezeichnet ist, als in den Untergrund eingerammter Pfahl 17 ausgebildet sein. Bei der Ausführung gemäß Figur 4 links ist zur Bildung eines stationären Halters ein den Fluß überspannendes, am Ufer verankertes Halteseil 18 vorgesehen.

Bei dem der Figur 4 zugrundeliegenden Beispiel sind zwei praktisch gleiche erfindungsgemäße Baueinheiten in Strömungsrichtung hintereinander angeordnet. Die Generatoren dieser Aggregate können zur Versorgung jeweils zugeordneter Verbraucher dienen. Im dargestellten Ausführungsbeispiel wird der durch sämtliche Generatoren 4 erzeugte Strom in ein bei 19 angedeutetes Netz eingespeist. In der Praxis können Differenzen der Drehzahlen der verschiedenen Turbinen 3 auftreten, die sich in Form von Schwankungen im Bereich der Generatorausgänge äußern. Um dies auszugleichen. können mit/den Turbinenwellen 5 zusammenwirkende, gesteuerte Bremseinrichtungen vorgesehen sein. Im dargestellten Ausführungsbeispiel ist hierzu, wie Figur 4 weiter zeigt, eine sämtlichen Turbinen bzw. Generatoren zugeordnete Steuereinheit 20 vorgesehen. Diese besteht aus einer der Anzahl der Generatoren 4 entsprechenden Anzahl von mit jeweils einem Generator 4 verbundenen Gleichrichtern 21, deren Ausgangswerte zum Ausgleich von Drehzahldifferenzen und damit Spannungsschwankungen auf einen gleichen Wert eingestellt sind und die bezüglich eines nachgeordneten, zur Erzeugung von Wechselstrom dienenden Wechselrichters 22 parallel geschaltet sind. Im dargestellten Ausführungsbeispiel sind die Generatoren 2 als Wechselstromgeneratoren ausgebildet, wobei der hiervon erzeugte Wechselstrom mittels der Gleichrichter 21 gleichgerichtet und anschließend mittels des Wechselrichters 22 wieder in Wechselstrom umgewandelt wird. Aber auch im Falle der Verwendung von Gleichstromgeneratoren erweist sich die Verwendung nachgeschalteter Gleichrichter zum Zwecke des Ausgleichs von Schwankungen als zweckmäßig. Der Wechselrichter 22 wird, wie bei 23 angedeutet ist, vom Netz 19 aus getaktet, so daß seine Ausgangsfreuquenz mit der Netzfrequenz genau übereinstimmt. Der Ausgang des Wechselrichters 22 liegt an einem nachgeordneten Transformator 24, der die Spannung auf jeden gewünschten Wert transformiert. Der Ausgang des Transformators 24 geht über eine Fernleitung an das Netz 19, wobei am Ende der Fernleitung ein weiterer Transformator vorgesehen sein kann, um die Spannung auf Netzspannung zu transformieren.

**Ansprüche**

1. Stromaggregat mit mindestens zwei parallel nebeneinander angeordneten, in ein Flußbett eingelegten, überfluteten Turbinen, die jeweils einen zugeordneten Generator antreiben, dadurch gekennzeichnet, daß die turbinen (3), die jeweils mindestens eine auf einer Welle (5) aufgenommene Schaufel in Form eines etwa über die ganze Wellenlänge sich erstreckenden Schnekkengangs (6) aufweisen, und die Generatoren (4), die wasserdicht gekapselt sind, auf einem im Flußbett verankerbaren, palettenförmigen Tragrahmen (1) aufgenommen sind, der Lagerböcke (2) für die Turbinen (3) und die Generatoren (4) aufweist.

2. Stromaggregat nach Anspruch 1, dadurch gekennzeichnet, daß die Generatoren (4) mit ihrer Antriebswelle (8) koaxial zur Welle (5) der jeweils zugeordneten Turbine (3) angeordnet und hiermit mittels einer Wellenkupplung (9) direkt gekuppelt sind.

3. Stromaggregat nach einem der vorhergehenden Ansprüche, dadurch gekennzeichnet, daß die Generatoren (4) im Bereich des stromabwärtigen Endes der jeweils zugeordneten Turbine (3) auf den Tragrahmen (1) aufgenommen sind.

4. Stromaggregat nach einem der vorhergehenden Ansprüche, dadurch gekennzeichnet, daß auf dem Tragrahmen (1) zwei parallel nebeneinander angeordnete Turbinen mit jeweils eine gegenläufige Steigung aufweisenden Schneckengängen (6) aufgenommen sind.

5. Stromaggregat nach einem der vorhergehenden Ansprüche, dadurch gekennzeichnet, daß der Tragrahmen (1) im Bereich seiner Unterseite mit vorzugsweise in Strömungsrichtung gekrümmten Verankerungszinken (15) versehen ist.

6. Stromaggregat nach einem der vorhergehenden Ansprüche, dadurch gekennzeichnet, daß der Tragrahmen (1) mit seiner in Strömungsrichtung hinteren Seite an einem vorzugsweise als verankertes Halteseil (18) und/oder verankerter Haltepfahl (17) ausgebildeten, stationären Halter angehängt ist.

7. Stromaggregat nach einem der vorhergehenden Ansprüche, dadurch gekennzeichnet, daß die dem Wasser ausgesetzten Teile des Tragrahmens (1), der Turbinen (3) und der Generatoren (4) aus rostfreien Material bestehen.

8. Stromaggregat nach einem der vorhergehenden Ansprüche, dadurch gekennzeichnet, daß der Tragrahmen (1) den Turbinen (3) zugeordnete Leiteinrichtungen (12) aufweist.

9. Stromaggregat nach Anspruch 8, dadurch gekennzeichnet, daß die Leiteinrichtungen (12) wassereintrittsseitig trichterförmig erweitert sind.

10. Stromaggregat nach einem der vorhergehenden Ansprüche, dadurch gekennzeichnet, daß jedem Generator (4) ein Gleichrichter (21) nachgeordnet ist, wobei sämtliche Gleichrichter (21) auf einen gleichen Ausgangswert eingestellt und bezüglich eines nachgeordneten Wechselrichters - (22) parallel geschaltet sind, der mit der Frequenz des zu versorgenden Stromnetzes (19) getaktet, vorzugsweise direkt vom Netz (19) gesteuert ist und daß dem Wechselrichter (22) ein Transformator (24) nachgeordnet ist.

FIG 2

FIG 3

FIG 1

0 222 352

FIG 4

0 222 352